# FASCICULE DE BREVET EUROPEEN

(11) **EP 1 187 942 B1**
(45) Date de publication et mention de la délivrance du brevet: **23.07.2003**
(21) Numéro de dépôt: 00940384.1
(22) Date de dépôt: 19.06.2000
(51) Int. Cl.: C21B 13/14, C21B 13/02, C21B 13/06

(54) **PROCEDE DE PRODUCTION DE FONTE LIQUIDE**
VERFAHREN ZUR FERTIGUNG EINER ROHEISENSCHMELZE
METHOD FOR PRODUCING MELT IRON

(30) Priorité: 21.06.1999 LU 90406
(43) Date de publication de la demande: 20.03.2002
(73) Titulaire: PAUL WURTH S.A., 1122 Luxembourg (LU)
(72) Inventeur: ROTH, Jean-Luc, F-57100 Thionville (FR); SOLVI, Marc, L-3961 Ehlange s/Mess (LU); MONAI, Jean, L-4751 Pétange (LU)
(74) Mandataire: Kihn, Pierre Emile Joseph
(86) Numéro de dépôt international: EP0005622
(87) Numéro de publication internationale: WO00079012

(56) Documents cités:
- WO-A-97/17473
- DE-A- 4 240 197
- US-A- 2 089 782
- US-A- 4 160 663
- PATENT ABSTRACTS OF JAPAN vol. 012, no. 040 (C-474), 5 février 1988 (1988-02-05) & JP 62 188714 A (SUMITOMO METAL IND LTD), 18 août 1987 (1987-08-18)
- "HIGH CARBON DRI WITH DIRECT HOT CHARGING TO EAF" STEEL TIMES INTERNATIONAL - INCORPORATING IRON & STEEL INTERNATIONAL,GB,FMJ INTERNATIONAL PUBLICATIONS, REDHILL, SURREY, ENGLAND, vol. 17, no. 6, 1 novembre 1993 (1993-11-01), pages 42-43, XP000417748 ISSN: 0143-7798

## Description

L'invention concerne un procédé de production de fonte liquide.

Depuis de nombreuses années, des efforts considérables sont déployés pour développer des procédés de réduction I fusion pouvant remplacer le haut fourneau pour la production de fonte liquide surtout dans le cadre d'unités de production à plus faible volume et évitant la préparation des matières c.-à-d. utilisant directement des fines de minerai et de charbon. De tels procédés sont intéressants puisque l'on peut éviter, en principe, des installations représentant un investissement conséquent telles que des installations de production de coke et des installations d'agglomération du minerai.

Les procédés actuellement disponibles présentent des désavantages.

Une des difficultés d'un tel procédé fabricant directement de la fonte réside dans le fait que les deux composantes du procédé - la réduction directe et la fusion - exigent des conditions d'opérations divergentes. En effet, pendant la réduction des particules de minerai de fer, on cherche à maintenir une atmosphère réductrice tandis que lors de la fusion, il faut injecter des quantités importantes d'oxygène pour exploiter efficacement l'énergie des combustibles carbonés.

Dans les procédés connus, on injecte les gaz issus du four de fusion dans le four de préréduction. Comme les gaz issus du four de fusion sont pauvres en monoxyde de carbone et riches en dioxyde de carbone, l'injection de grandes quantités de tels gaz dans le four de préréduction perturbe la réduction du minerai de fer.

Dans une version améliorée de ce procédé, les gaz chauds issus du four de fusion sont enrichis en monoxyde carbone avant d'être injectés dans le four de préréduction. Les gaz riches en dioxyde de carbone issus du four de fusion sont mis en contact avec du charbon et une grande partie du dioxyde de carbone se transforme en monoxyde de carbone par réaction avec le charbon. L'augmentation du pouvoir de réduction des gaz issus du four de fusion est bien entendu favorable à la réaction à l'intérieur du four de préréduction. Cependant, cette opération est coûteuse au point de vue énergétique.

Il serait avantageux de disposer d'un procédé optimisé permettant de produire de la fonte directement à partir de particules de fer préréduit.

Le document WO 97/17473 concerne un procédé de production métaux et métaux alliés à partir d'oxydes métalliques. Dans une première étape du procédé, on injecte des oxydes métalliques et/ou des oxydes métalliques partiellement réduits et un matériau carboné solide dans un récipient de pré-réduction pour réduire partiellement les oxydes métalliques et/ou des oxydes métalliques partiellement réduits et libérer au moins partiellement la fraction volatile d'un matériau carboné solide. Dans une deuxième étape, on poursuit la réduction des oxydes métalliques partiellement réduits pour produire du métal fondu. Pour cela, les oxydes métalliques partiellement réduits et le matériau carboné solide au moins partiellement dévolatilisé lors de la première étape sont injectés dans un récipient de réduction/fusion contenant un bain de métal et laitiers fondus.

De préférence, la première étape du procédé de WO 97/17473 comprend une étape de séchage, préchauffage, et réduction partielle des oxydes métalliques, dans un premier récipient de pré-réduction, avec des gaz provenant du four de réduction/fusion et/ou d'un deuxième récipient de pré-réduction. Ensuite, les oxydes métalliques pré-réduits, séchés et préchauffés sont transférés avec le matériau carboné solide dans un deuxième récipient de pré-réduction pour la poursuite de la réduction des oxydes métalliques et la libération au moins partielle des fractions volatile du matériau solide carboné.

Le document DE 42 40 197-A concerne un procédé de production de fonte à partir d'oxydes métalliques. Le minerai de fer est tout d'abord traité dans une unité de réduction puis introduit dans une unité de fusion.

Dans l'unité de réduction, un gaz réducteur comprenant du monoxyde de carbone et de l'hydrogène circule de bas en haut. Le minerai de fer, avec le cas échéant des additifs, circule de haut en bas, où il est évacué pour son traitement ultérieur dans l'unité de fusion. Le gaz réducteur provient de l'unité de fusion. L'unité de réduction comprend une suite de planchers répartiteurs de gaz, disposés de manière oblique, en cascade et en zigzags, sur lesquels le minerai de fer, avec le cas échéant des additifs, progresse vers le bas du four. Dans la partie supérieure de l'unité de réduction on introduit des oxydes métalliques, avec le cas échéant des additifs, de granulométrie grossière. Des oxydes métalliques de granulométrie plus fine sont introduits dans la partie centrale de l'unité de réduction, et les additifs de granulométrie fine sont, le cas échéant, introduits dans la partie centrale ou inférieure de l'unité de réduction.

Le gaz réducteur, qui s'élève dans l'unité de réduction, traverse donc les couches de minerai de fer, éventuellement mélangé à des additifs, qui circule de haut en bas dans le four, et accomplit ainsi le travail de réduction, pendant qu'il se libère simultanément de la majorité des poussières entraînées dans ces mêmes couches.

JP 62 188714-A divulgue un procédé de production de fonte liquide. Du minerai de fer et du charbon sont chargés dans un réacteur de réduction/cokéfaction du type à lit fixe pour pré-réduire le minerai de fer et cokéfier le charbon en coke. Le minerai de fer préréduit et le coke sont ensuite chargés dans un four d'affinage du type convertisseur pour les fondre avec injection d'oxygène.

L'objet de la présente invention est de proposer un procédé de production de fonte optimisé.

Conformément à l'invention, cet objectif est atteint par un procédé de production de fonte liquide comprenant les étapes suivantes :
a) réduction de particules de minerai de fer pour former du fer préréduit comprenant un excès de carbone libre,
b) transfert à chaud du fer préréduit dans un four de fusion,
c) fusion des particules de fer préréduit dans un four de fusion pour obtenir de la fonte liquide.

Selon un aspect important de l'invention,l'étape a) comprend les étapes suivantes :
a1) on introduit dans un four multi-étages comprenant plusieurs étages superposés du minerai de fer et on le dépose sur l'étage supérieur du four mutti-étages,
a2) on transfère le minerai de fer graduellement sur les étages inférieurs,
a3) on ajoute à un ou plusieurs des étages inférieurs un réducteur carboné en quantité suffisante pour réduire le minérai de fer et pour assurer un excès de carbone libre,
a4) on chauffe le four multi-étages et on réduit le minerai de fer au contact du réducteur carboné et des gaz produits par le réducteur carboné à des températures adéquates,
a5) on brûle l'excédent de gaz produits par le réducteur carboné dans la partie supérieure du four multi-étages et on met à profit la chaleur résultante pour sécher et préchauffer le minerai de fer dans les étages supérieurs.

Selon un mode de réalisation préféré, on ajoute en outre des agents de formation de laitier pendant l'étape a) ou l'étape b). Ces agents de formation de laitier sont choisis, de préférence parmi le groupe constitué de chaux, de castine et de magnésie ainsi que de leurs mélanges.

Avantageusement, le fer préréduit est compacté avant son transfert dans le four de fusion. On forme des briquettes qui contiennent le fer préréduit, le carbone libre en excès et le cas échéant les agents de formation de laitier. Les briquettes ayant une densité plus élevée que les particules à partir desquelles elles sont formés présentent les avantages suivants : elles pénètrent plus facilement dans le bain de fonte liquide contenu dans le four de fusion, une quantité moindre de fer préréduit est piégée dans la couche de laitier recouvrant la fonte liquide et une partie moindre du fer et de carbone libre sont entraînés par les gaz s'échappant du four de fusion.

L'excès de carbone à l'issue de l'étape a) est avantageusement compris entre 7% et 15% et de préférence voisin de 10%.

Le réducteur carboné solide est choisi parmi le charbon ou les produits pétroliers liquides ou solides. Les fractions volatiles contenues dans le réducteur carboné sont éliminées pendant leur séjour à l'intérieur du four multi-étages, le soufre également en partie.

Une partie du carbone en excès est consommée pendant l'étape c).

Selon un mode de réalisation particulier, le four de fusion est un four électrique.

On injecte de l'oxygène pendant l'étape c) afin de brûler le carbone libre en excès et d'apporter ainsi une part importante de l'énergie nécessaire à la fusion pendant l'étape c). De plus, le carbone libre en excès est utile pour terminer les réactions de réduction et pour carburer la fonte.

Il est important de noter que dans le procédé selon l'invention, les gaz issus du four de fusion ne sont pas injectés dan le four de réduction. Le procédé de réduction n'est dès lors pas perturbé par ces gaz à pouvoir oxydant élevé.

Un des avantages du présent procédé est que le fonctionnement des deux réacteurs est optimisé. En effet, le fait de produire un préréduit comprenant un excès de carbone libre accroît la vitesse de réduction et augmente le taux de métallisation, cependant il augmente également le coût de production des particules de fer préréduit. Dans les procédés traditionnels de production de particules de fer préréduit, on vise à obtenir un produit qui ne contient que peu ou pas de carbone résiduel car bien entendu, le carbone qui reste dans le produit fini sans avoir réagi représente un coût de production supplémentaire et non valorisé.

Pour obtenir cet excès de carbone libre, il est nécessaire d'ajouter une quantité appropriée de réducteur carboné pendant l'étape de réduction.

Un autre avantage du carbone libre en excès dans le fer préréduit réside dans le fait que dans les étages de réduction du réacteur de réduction, les températures sont très élevées et que par conséquent, le réducteur carboné, en l'occurrence le charbon, est dévolatilisé et dans une large mesure désulfuré. Il s'est avéré que, pendant l'étape de fusion, le charbon dévolatilisé était plus facilement soluble dans le bain de fonte que le charbon non dévolatilisé. De plus, comme le réducteur carboné est soumis à de très hautes températures pendant son séjour à l'intérieur du réacteur de réduction, la teneur en soufre diminue considérablement. La fonte ainsi obtenue présente des teneurs en soufre plus faibles. Bien entendu, on aurait pu utiliser du coke au lieu de charbon pendant la fusion des particules de fer préréduit afin d'obtenir une meilleure solubilité du carbone. Cependant, le fait d'utiliser du coke au lieu de charbon augmente les coûts de production et ne résout pas le problème du soufre. En effet, le coke ne contient pas de matières volatiles ; cependant, il contient sensiblement la même quantité de soufre que le charbon utilisé lors de sa production.

L'excès de carbone est brûlé dans le four de fusion et permet donc d'économiser de l'énergie électrique pendant la fusion des particules.

Le fait d'ajouter le réducteur carboné seulement au niveau des derniers étages du four multi-étages permet de mettre à profit la chaleur résiduelle des gaz pour sécher et préchauffer les particules de minerai de fer et de brûler complètement le monoxyde de carbone. Une post-combustion séparée n'est pas nécessaire. De plus, la température plus élevée de ces dernières éatges réduit d'avantage la teneur en soufre dans le carbone libre.

Il ne s'agit donc pas d'une juxtaposition de deux procédés connus, mais d'une interaction entre les deux procédés qui conduit à des avantages inattendus.

D'autres particularités et caractéristiques de l'invention ressortiront de la description détaillée d'un mode de réalisation avantageux présenté ci-dessous, à titre d'illustration, en se référant au dessin annexé. Celui-ci montre:

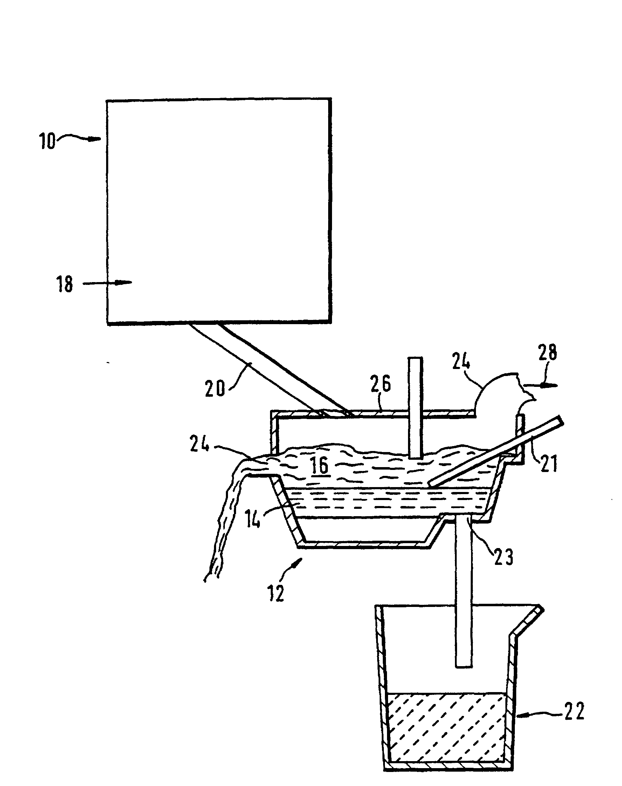

Fig.1: Schéma de principe du procédé de production de fonte liquide selon l'invention.

La Fig.1 illustre un schéma de principe du procédé de production de fonte liquide selon la présente. On y voit un réacteur de préréduction, ici un four multi-étages 10, dans lequel on réduit des particules de minerai de fer pour former du fer préréduit. Le fer préréduit est ensuite transféré à chaud dans un four de fusion, ici un four électrique 12. Le fer préréduit y est fondu et l'on obtient un bain de fonte liquide 14 recouvert d'une couche de laitier 16.

Ainsi, la première étape du procédé concerne la réduction de particules de fer dans le four multi-étages 10. Le four multi-étages 10 comprend une série d'étages annulaires espacés verticalement. Les particules de minerai de fer sont introduites à l'étage supérieur et sont transférées graduellement aux étages inférieurs.

Dans la partie inférieure du four multi-étages 10, on introduit sur plusieurs étages du charbon, flèche 18. Il sera apprécié que le charbon soit introduit en quantité suffisante pour réduire les particules de minerai de fer et pour assurer un excès de charbon libre. En d'autres termes, le fer préréduit comprend un excès de charbon libre. De préférence, l'ajout de charbon dans les étages inférieurs du four multi-étages 10 est tel qu'à la sortie du four 10 on obtient un excès de charbon libre d'environ 10%.

La réduction du minerai de fer se fait au contact du charbon et des gaz produits par celui-ci, en chauffant le four multi-étages 10 à des températures jusqu'à 1050°C à 1200°C. L'excédent de gaz produits par le charbon monte dans le four multi-étages 10 et on le brûle dans la partie supérieure de ce dernier. Cette combustion permet de sécher et de préchauffer le minerai de fer dans les étages supérieurs.

On remarquera que l'excès de charbon libre introduit accroît la vitesse de réduction et le taux de métallisation. C'est une manière d'optimiser le fonctionnement du four multi-étages 10 puisque le taux de préréduction et la productivité se voient augmentés.

A la sortie du four multi-étages 10, le fer préréduit est transféré à chaud dans le four électrique 12, par l'intermédiaire d'un conduit 20 reliant les deux réacteurs.

La production de fer préréduit comprenant du charbon libre en excès est contraire aux conditions de production habituelles qui visent à minimiser la quantité de charbon dans le four de préréduction. Toutefois, comme expliqué plus haut, le charbon libre en excès permet d'optimiser le fonctionnement du four multi-étages 10.

De plus, l'utilisation de charbon libre au four électrique 12 permet également d'améliorer le fonctionnement de celui-ci. En effet le charbon libre est débarrassé des fractions volatiles dans le four multi-étages, et se dissout plus facilement dans le bain de fonte liquide 14. Les sulfures sont également éliminés en majeure partie dans le four multi-étages 10, ce qui diminue la teneur en soufre du bain de fonte liquide 14.

Une lance à oxygène 21 permet d'injecter un jet d'oxygène pour brûler le charbon en excès. C'est un apport énergétique pour la fusion du fer préréduit qui vient s'ajouter à l'énergie électrique.

La fonte liquide est évacuée du four électrique 12 dans un creuset 22 par l'intermédiaire d'un trou de coulée 23.

On notera que les gaz du four électrique ne sont pas introduits dans le four multi-étages 10 mais sont extraits par une ouverture 24 dans la voûte 26 du four électrique 12, comme l'indique la flèche 28.

Des agents de formation de laitier sont introduits déjà dans le four multi-étages 10 ou au cours du transfert du fer préréduit dans le four électrique 12. En vue de la récupération du laitier pour un traitement ultérieur, une ouverture de vidange 24 de laitier est prévue dans la paroi du four électrique 12.

## Revendications

1. Procédé de production de fonte liquide comprenant les étapes suivantes :
a) réduction de particules de minerai de fer pour former du fer préréduit comprenant un excès de carbone libre, cette étape de réduction comprenant les étapes suivantes:
a1) on introduit dans un four multi-étages comprenant plusieurs étages superposés le minerai de fer et on le dépose sur l'étage supérieur du four multi-étages,
a2) on transfère le minerai de fer graduellement sur les étages inférieurs,
a3) on ajoute à un ou plusieurs des étages inférieurs un réducteur carboné en une quantité suffisante pour réduire le minerai de fer et pour assurer un excès de carbone libre,
a4) on chauffe le four multi-étages et on réduit le minerai de fer au contact du réducteur carboné et des gaz produits par le réducteur carboné à des températures adéquates,
a5) on brûle l'excédent de gaz produits par le réducteur carboné dans la partie supérieure du four multi-étages et on met à profit la chaleur résultante pour sécher et préchauffer le minerai de fer,
b) transfert à chaud du fer préréduit dans un four de fusion,
c) fusion du fer préréduit dans un four de fusion pour obtenir de la fonte liquide, les gaz issus du four de fusion n'étant pas injectés dans le four multi-étages.

2. Procédé selon la revendication 1, **caractérisé en ce que** pendant l'étape a) ou l'étape b), on ajoute des agents de formation de laitier.

3. Procédé selon la revendication 2, **caractérisé en ce que** les agents de formation de laitier sont choisis parmi le groupe constitué de chaux, de castine et de magnésie ainsi que de leurs mélanges.

4. Procédé selon l'une quelconque des revendications précédentes, **caractérisé en ce que** le fer préréduit est compacté avant son transfert dans le four de fusion.

5. Procédé selon l'une quelconque des revendications précédentes, **caractérisé en ce que** l'excès de carbone est compris entre 7% et 15% et de préférence voisin de 10%.

6. Procédé selon l'une quelconque des revendications précédentes, **caractérisé en ce que** le réducteur carboné solide est du charbon.

7. Procédé selon l'une quelconque des revendications précédentes, **caractérisé en ce que** l'on dévolatilise le réducteur carboné pendant l'étape a).

8. Procédé selon l'une quelconque des revendications précédentes, **caractérisé en ce que** l'on désulfure le réducteur carboné pendant l'étape a).

9. Procédé selon l'une quelconque des revendications précédentes, **caractérisé en ce que** le carbone en excès est consommé pendant l'étape c).

10. Procédé selon l'une quelconque des revendications précédentes, **caractérisé en ce que** le four de fusion est un four électrique.

11. Procédé selon l'une quelconque des revendications précédentes, **caractérisé en ce que** l'on injecte de l'oxygène pendant l'étape c) afin de brûler une partie du carbone libre en excès.

## Patentansprüche

1. Verfahren zur Herstellung von flüssigem Roheisen mit folgenden Schritten:
a) Reduktion von Eisenerzpartikeln zur Bildung von Eisenschwamm mit einem Überschuss an freiem Kohlenstoff, wobei dieser Reduktionsschritt folgende Schritte umfasst:
a1) das Eisenerz wird in einen Mehretagenofen mit mehreren übereinander liegenden Etagen eingebracht und auf der oberen Etage des Mehretagenofens abgelegt,
a2) das Eisenerz wird schrittweise auf die unteren Etagen überführt,
a3) einer oder mehreren der unteren Etagen wird ein kohlenstoffhaltiges Reduktionsmittel in ausreichender Menge zugeführt, um das Eisenerz zu reduzieren und einen Überschuss an freiem Kohlenstoff sicherzustellen,
a4) der Mehretagenofen wird aufgeheizt und das Eisenerz wird beim Kontakt mit dem kohlenstoffhaltigen Reduktionsmittel und den durch das kohlenstoffhaltige Reduktionsmittel erzeugten Gasen bei geeigneten Temperaturen vorreduziert,
a5) die durch das kohlenstoffhaltige Reduktionsmittel erzeugten Gase werden im oberen Bereich des Mehretagenofens verbrannt und die dabei entstehende Wärme wird zum Trocknen und Vorwärmen des Eisenerzes genutzt,
b) Heißüberführung des Eisenschwamms in einen Schmelzofen,
c) Aufschmelzen des Eisenschwamms in einem Schmelzofen zur Erzeugung von flüssigem Roheisen, wobei die Gase aus dem Schmelzofen nicht in den Mehretagenofen eingeblasen werden.

2. Verfahren nach Anspruch 1, **dadurch gekennzeichnet, dass** im Schritt a) oder Schritt b) Schlackenbildner zugesetzt werden.

3. Verfahren nach Anspruch 2, **dadurch gekennzeichnet, dass** die Schlackenbildner aus der aus Kalk, Kalkstein und Magnesia sowie deren Gemischen bestehenden Gruppe gewählt sind.

4. Verfahren nach einem der vorhergehenden Ansprüche, **dadurch gekennzeichnet, dass** der Eisenschwamm vor seiner Überführung in den Schmelzofen verdichtet wird.

5. Verfahren nach einem der vorhergehenden Ansprüche, **dadurch gekennzeichnet, dass** der Überschuss an Kohlenstoff im Bereich von 7 % bis 15 % und vorzugsweise nahe bei 10 % liegt.

6. Verfahren nach einem der vorhergehenden Ansprüche, **dadurch gekennzeichnet, dass** das feste kohlenstoffhaltige Reduktionsmittel Kohle ist.

7. Verfahren nach einem der vorhergehenden Ansprüche, **dadurch gekennzeichnet, dass** die flüchtigen Anteile des kohlenstoffhaltigen Reduktionsmittels im Schritt a) beseitigt werden.

8. Verfahren nach einem der vorhergehenden Ansprüche, **dadurch gekennzeichnet, dass** das kohlenstoffhaltige Reduktionsmittel im Schritt a) entschwefelt wird.

9. Verfahren nach einem der vorhergehenden Ansprüche, **dadurch gekennzeichnet, dass** der überschüssige Kohlenstoff im Schritt c) verbraucht wird.

10. Verfahren nach einem der vorhergehenden Ansprüche, **dadurch gekennzeichnet, dass** der Schmelzofen ein Elektroofen ist.

11. Verfahren nach einem der vorhergehenden Ansprüche, **dadurch gekennzeichnet, dass** im Schritt c) Sauerstoff eingeblasen wird, um einen Teil des überschüssigen freien Kohlenstoffs zu verbrennen.

## Claims

1. Method for producing molten pig iron comprising the following steps:
(a) reduction of iron ore particles to form pre-reduced iron containing surplus free carbon, said reduction step comprising the following steps:
(a1) iron ore is introduced into a multiple-hearth furnace with several superimposed hearths and it is deposited on the uppermost hearth of the multiple-hearth furnace,
(a2) the iron ore is gradually transferred to the lower hearths,
(a3) a carbon-containing reducing agent is added to one or more of the lower hearths in sufficient amounts to reduce the iron ore and to ensure that there is surplus free carbon,
(a4) the multiple-hearth furnace is heated and the iron ore is reduced on contact with the carbon-containing reducing agent and the gases produced by the carbon-containing reducing agent at adequate temperatures,
(a5) the excess gas produced by the carbon-containing reducing agent is burnt in the upper part of the multiple-hearth furnace and advantage is taken of the resultant heat to dry and pre-heat the iron ore.
(b) transfer while hot of the pre-reduced iron to a melting furnace,
(c) melting of the pre-reduced iron in a melting furnace in order to obtain the molten pig iron, wherein the gases from the melting furnace are not injected into the multiple-hearth furnace.

2. Method according to Claim 1, **characterised in that**, during step (a) or step (b), slag-forming agents are added.

3. Method according to Claim 2, **characterised in that** the slag-forming agents are chosen from the group consisting of lime, limestone flux and magnesia as well as mixtures of them.

4. Method according to any one of the preceding claims, **characterised in that** the pre-reduced iron is compacted before its transfer to the melting fumace.

5. Method according to any one of the preceding claims, **characterised in that** the amount of surplus carbon lies between 7 per cent and 15 per cent, and is preferably close to 10 per cent.

6. Method according to any one of the preceding claims, **characterised in that** the carbon-containing reducing agent is coal.

7. Method according to any one of the preceding claims, **characterised in that** the volatile fractions of the carbon-containing reducing agent are removed during step (a).

8. Method according to any one of the preceding claims, **characterised in that** the carbon-containing reducing agent is desulphurised during step (a).

9. Method according to any one of the preceding claims, **characterised in that** the surplus carbon is consumed during step (c).

10. Method according to any one of the preceding claims, **characterised in that** the melting furnace is an electric furnace.

11. Method according to any one of the preceding claims, **characterised in that** oxygen is injected during step (c) in order to burn part of the surplus free carbon.
